# EUROPEAN PATENT APPLICATION

(11) **EP 4 060 797 A1**
(43) Date of publication of application: **21.09.2022**
(21) Application number: 21750222.8
(22) Date of filing: 05.02.2021
(51) Int. Cl.: H01M 50/116, H01M 50/10, H01M 50/543, H01M 50/557

(54) **POUCH-TYPE SECONDARY BATTERY AND BATTERY MODULE**

(30) Priority: 07.02.2020 KR 20200015099; 04.02.2021 KR 20210016354
(71) Applicant: LG Energy Solution, Ltd., Seoul 07335 (KR)
(72) Inventor: CHOI, Kyu Hyun, Daejeon 34122 (KR); CHOI, Hang June, Daejeon 34122 (KR); KANG, Dal Mo, Daejeon 34122 (KR); MOON, Jeong Oh, Daejeon 34122 (KR); KONG, Jin Hak, Daejeon 34122 (KR)
(74) Representative: Plasseraud IP
(86) International application number: PCT/KR2021/001565
(87) International publication number: WO 2021/158070

(57) **Abstract**

Disclosure is a pouch-type secondary battery and a battery module.

According to one aspect of the present invention for achieving the above object, a pouch-type secondary battery comprises: an electrode assembly having a structure in which electrodes and separators are alternately disposed; and a pouch-type exterior configured to accommodate the electrode assembly, wherein the exterior comprises: an accommodation part in which a space accommodating the electrode assembly is formed; and a sealing part formed along a circumference of the accommodation part and formed by attaching some areas of the exterior to each other so that the accommodation part is sealed from the outside, wherein a plurality of corners are formed on the sealing part, at least one of the plurality of corners comprises: a recess part recessed toward the electrode assembly; and a diagonal part formed adjacent to the recess part and formed toward the recess part in a diagonal direction (S) by crossing a longitudinal direction (L) of the exterior.

## Description

### CROSS-REFERENCE TO RELATED APPLICATION

The present application claims the benefit of the priority of Korean Patent Application Nos. 10-2020-0015099, filed on February 07, 2020, and 10-2021-0016354, filed on February 04, 2021, which are hereby incorporated by reference in their entirety.

### TECHNICAL FIELD

The present invention relates to a pouch-type secondary battery and a battery module.

### BACKGROUND ART

Secondary batteries that are repetitively chargeable and dischargeable may be divided into cylindrical type secondary batteries, prismatic type secondary batteries, and pouch-type secondary batteries according to their structures and manufacturing methods. Among them, such a pouch-type secondary battery is manufactured by accommodating an electrode assembly in a pouch-type sheet and then sealing the sheet. When compared to other types of secondary batteries, the pouch-type secondary battery has a simple structure and high capacity per unit volume and thus is widely used in vehicle batteries or energy storage devices.

In more detail, in the pouch-type secondary battery, after forming a cup in a shape that is recessed in the pouch-type sheet, the electrode assembly is accommodated in the cup, and the pouch-type sheet is folded so that one area of the pouch-type sheet covers the electrode assembly. Then, a sealing part that seals a circumference of the electrode is formed to manufacture the pouch-type secondary battery. In general, the sealing part may have a shape protruding outward.

A battery module in which a plurality of secondary batteries are disposed is manufactured to be used in an electronic device (e.g., an energy storage device) that requires a large electric capacity. In the battery module, components disposed around the secondary battery are provided together in addition to the secondary battery. According to the related art, since the sealing part formed on the pouch-type secondary battery protrudes outward, there is a problem of interference with the components of the battery module, which are disposed around the secondary battery. When such an interference occurs, there is a problem that the sealing part of the secondary battery is bent, and when the bending is severe, the secondary battery is damaged. When the secondary battery is damaged, it adversely affects not only the damaged secondary battery, but also the safety of the battery module comprising the secondary battery.

### DISCLOSURE OF THE INVENTION

### TECHNICAL PROBLEM

An object of the present invention for solving the above problem is to improve safety of a battery module by reducing a degree of protrusion of a sealing part to the outside in a pouch-type secondary battery to solve the problem of interference between the secondary battery and other components when the battery module is manufactured.

### TECHNICAL SOLUTION

According to one aspect of the present invention for achieving the above object, a pouch-type secondary battery comprises: an electrode assembly having a structure in which electrodes and separators are alternately disposed; and a pouch-type exterior configured to accommodate the electrode assembly, wherein the exterior comprises: an accommodation part in which a space accommodating the electrode assembly is formed; and a sealing part formed along a circumference of the accommodation part and formed by attaching some areas of the exterior to each other so that the accommodation part is sealed from the outside, wherein a plurality of corners are formed on the sealing part, at least one of the plurality of corners comprises: a recess part recessed toward the electrode assembly; and a diagonal part formed adjacent to the recess part and formed toward the recess part in a diagonal direction (S) by crossing a longitudinal direction (L) of the exterior.

The recess part may be formed in a curved shape that is recessed toward the electrode assembly.

The diagonal part may be formed in a straight line.

The recess part and the diagonal part may be in direct contact with each other.

An entire area of the recess part may be placed on an area adjacent to the electrode assembly based on a virtual line extending in the diagonal direction (S) of the diagonal part.

The pouch-type secondary battery may further comprise an electrode lead electrically connected to the electrode assembly and protruding outside from the sealing part, wherein each of the recess part and the diagonal part may be formed on a corner formed at one side of the electrode lead.

The recess part may be in direct contact with an area of the sealing part, from which the electrode lead protrudes.

The electrode lead may comprise: a first electrode lead protruding from one side of the sealing part; and a second electrode lead protruding from the other side of the sealing part, which is opposite to the one side, wherein the recess part and the diagonal part are formed at a corner formed at one side of the first electrode lead and a corner formed at one side of the second electrode lead, respectively..

According to another aspect of the prevent invention for achieving the above object, a battery module comprising the secondary battery is provided.

The secondary battery may be provided in plurality, the recess parts, which are respectively formed in the plurality of secondary batteries, may be arranged to face each other, and the diagonal parts, which are respectively formed in the plurality of secondary batteries, may be arranged to face each other.

### ADVANTAGEOUS EFFECTS

According to the present invention, the degree of protrusion of the sealing part to the outside may be reduced in the pouch-type secondary battery to solve the problem of the interference between the secondary battery and other components when the battery module is manufactured, thereby improving the safety of the battery module.

### BRIEF DESCRIPTION OF THE DRAWINGS

FIG. 1 is a plan view illustrating a structure of a pouch-type secondary battery according to the present invention.
FIG. 2 is an enlarged plan view illustrating a configuration of a corner of a sealing part in the pouch-type secondary battery according to the present invention.
FIG. 3 is an enlarged cross-sectional view illustrating an example of a state in which a coating part is further formed in the pouch-type secondary battery according to the present invention.

### MODE FOR CARRYING OUT THE INVENTION

Hereinafter, a pouch-type secondary battery and a battery module according to the present invention will be described with reference to the accompanying drawings.

### Pouch-type secondary battery

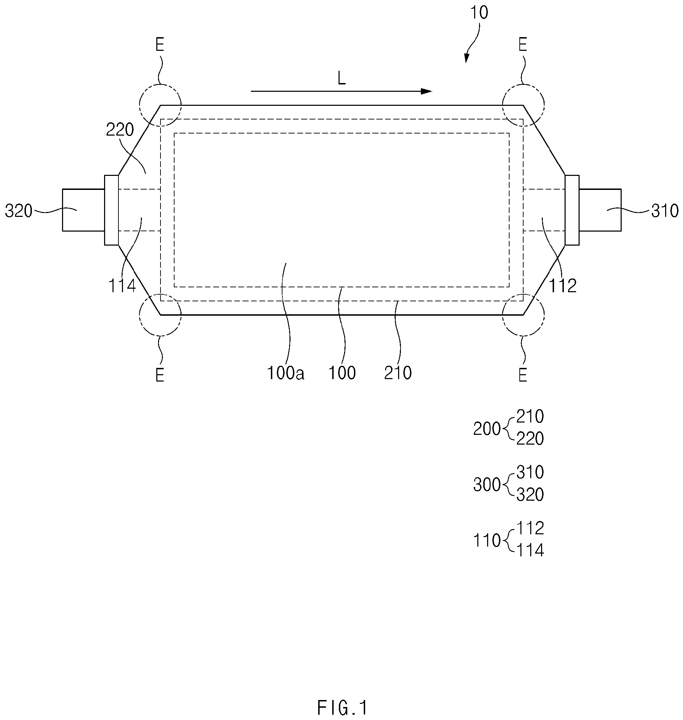

FIG. 1 is a plan view illustrating a structure of a pouch-type secondary battery according to the present invention.

As illustrated in FIG. 1, a pouch-type secondary battery 10 (hereinafter, referred to as a 'secondary battery') according to the present invention comprises an electrode assembly 100 and a pouch-type exterior 200 (hereinafter, referred to as an 'exterior') accommodating the electrode assembly. The electrode assembly 100 may have a structure in which electrodes and separators are alternately disposed in a thickness direction, and the exterior 200 may have a sheet structure having a thin thickness.

The electrode assembly 100 may comprise a main body 100a forming a body of the electrode assembly and an electrode tab 110 protruding from the main body in one direction. The electrode tab 110 may comprise a first electrode tab 112 and a second electrode tab 114. As illustrated in FIG. 1, according to an embodiment of the present invention, the first electrode tab 112 and the second electrode tab 114 may extend from one side and the other side, which is opposite to the one side, of the main body 100a of the electrode assembly 100, respectively. In this case, the first electrode tab 112 and the second electrode tab 114 may extend in opposite directions from the main body 100a. However, according to another embodiment of the present invention, both the first electrode tab 112 and the second electrode tab 114 may extend from one side of the main body of the electrode assembly 100. In this case, the first electrode tab 112 and the second electrode tab 114 may extend in the same direction from the main body 100a and may be provided adjacent to each other. Also, the first electrode tab 112 may be a positive electrode tab, and the second electrode tab 114 may be a negative electrode tab.

The exterior 200 may comprise an accommodation part 210, in which a space accommodating the electrode assembly 100 is formed, and a sealing part 220 formed along a circumference of the accommodation part and formed by attaching some areas of the exterior 200 to each other so that the accommodation part is sealed from the outside.

Subsequently, referring to FIG. 1, the secondary battery 10 according to the present invention may further comprise an electrode lead 300 electrically connected to the electrode assembly 100. In more detail, the electrode lead 300 may be electrically connected to the electrode assembly 100 by being directly connected to the electrode tab 110.

The electrode lead 300 may comprise a first electrode lead 310 and a second electrode lead 320. The first electrode lead 310 may be directly connected to the first electrode tab 112, and the second electrode lead 320 may be directly connected to the second electrode tab 114. As described above, since the first electrode tab 112 may be the positive electrode tab, and the second electrode tab 114 may be the negative electrode tab, the first electrode lead 310 directly connected to the first electrode tab 112 may be a positive electrode lead, and the second electrode lead 320 directly connected to the second electrode tab 114 may be a negative electrode lead.

As illustrated in FIG. 1, according to the present invention, the electrode lead 300 may protrude outward from the sealing part 220. In more detail, according to an embodiment of the present invention, the first electrode lead 310 may protrude from one side of the sealing part 220, and the second electrode lead 320 may protrude from the other side of the sealing part 200, which is opposite to the one side. However, according to another embodiment of the present invention, both the first electrode lead 310 and the second electrode lead 320 may protrude from one side of the sealing part 220.

As illustrated in FIG. 1, in the secondary battery 10 according to the present invention, a plurality of corners E may be formed on the sealing part 220. Here, in the present specification, the term 'corner' is defined to mean an area protruding outward from a circumference of an object when the object is viewed briefly. FIG. 1 illustrates a configuration in which one corner is formed at each of the first electrode lead 310 and the second electrode lead 320 in a vertical direction, in the secondary battery 10 (i.e., one corner is formed at each of upper and lower sides of the first electrode lead, and one corner is formed at each of upper and lower sides of the second electrode lead), i.e., total four corners E are formed.

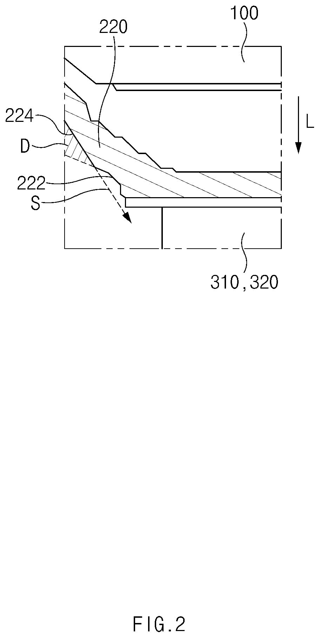

FIG. 2 is an enlarged plan view illustrating a configuration of the corner of the sealing part in the pouch-type secondary battery according to the present invention.

Referring to FIGS. 1 and 2, at least one of the plurality of corners E may comprise a recess part 222 that is recessed toward the electrode assembly 100 and a diagonal part 224 formed adjacent to the recess part and formed toward the recess part in a diagonal direction S by crossing a longitudinal direction L of the exterior 200. That is, according to the present invention, the diagonal direction S may not be parallel to the longitudinal direction L of the exterior.

Here, the recess part 222 may be formed in a curved shape that is recessed toward the electrode assembly 100 as illustrated in FIG. 2. However, the recess part 222 may have a recessed shape, but may be constituted by straight lines.

The diagonal part 224 may be formed in a straight line along the diagonal direction S. Also, the recess part 222 and the diagonal part 224 may be in direct contact with each other. That is, one end of the recess part 222 may be connected to one end of the diagonal part 224.

More preferably, according to the present invention, as illustrated in FIG. 2, an entire area of the recess part 222 may be placed on an area adjacent to the electrode assembly 100 based on a virtual line extending in the diagonal direction S that is a direction in which the diagonal part 224 extends.

According to the present invention, since the diagonal part 224 is formed on the sealing part 220 of the exterior 200 of the secondary battery 10, when compared to a case in which the diagonal part 224 is not formed, a protrusion region D (see FIG. 2) protruding outward disappears.

According to the prior art, in a process of manufacturing the pouch-type secondary battery, the protrusion region D has been formed together on the sealing part, and as a result, assembly properties of the battery module has been deteriorated, and safety has been also deteriorated. That is, in the process of manufacturing the battery module, an interference occurs between the protrusion region D formed on the sealing part and other components of the battery module to cause a problem in that the sealing part is bent, or the secondary battery is damaged. This adversely affected the safety of the battery module.

However, according to the present invention, the protrusion region D existing on the sealing part may be removed to solve the above problem that is caused by the existence of the protrusion region D.

According to the present invention, the recess part 222 and the diagonal part 224, which are formed on the sealing part 220, may be formed at the corner formed at one side of the electrode lead 300, as illustrated in FIGS. 1 and 2. More preferably, the recess part 222 may be in direct contact with an area of the sealing part 220 from which the electrode lead 300 protrudes.

Also, according to the present invention, the recess part 222 and the diagonal part 224 may be formed at the corner formed at one side of the first electrode lead 310 and the corner formed at one side of the second electrode lead 320, respectively. FIG. 1 illustrates a configuration in which the recess part 222 and the diagonal part 224 are formed at the corners formed at a lower side of the first electrode lead 310 and a lower side of the second electrode lead 320, respectively.

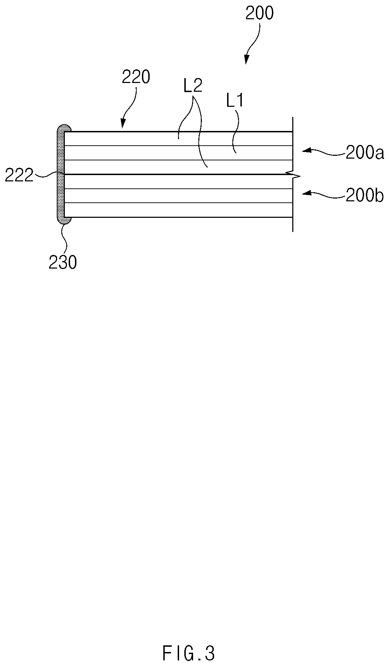

FIG. 3 is an enlarged cross-sectional view illustrating an example of a state in which a coating part is further formed in the pouch-type secondary battery according to the present invention.

Referring to FIGS. 1 to 3, the exterior 200 of the pouch-type secondary battery 10 according to the present invention may comprise, for example, an aluminum sheet L1 and a protective layer L2 disposed at each of both sides of the aluminum sheet L1. Here, the protective layer L2 may comprise a resin material or may comprise a resin and a nylon material. Here, the protective layer L2 may be formed as, for example, one or more layers. Also, the exterior 200 may comprise an upper case 200a and a lower case 200b, and outer circumferential surfaces of the upper case 200a and the lower case 200b may be pressed to form the sealing part 220 through thermal fusion, thereby sealing the sealing part 220.

The pouch-type secondary battery 10 according to the present invention may further comprise a coating part 230 applied to surround the recess part 222 and the diagonal part 224 as an additional example.

That is, the coating part 230 may be applied so that outer surfaces of the recess part 222 and the diagonal part 224 are not exposed to the outside.

Thus, when the recess part 222 and the diagonal part 224 are cut to be formed on the sealing part 220 of the exterior 200, a problem in which an end of the aluminum sheet L1 of the exterior 200 is exposed to the outside so as to be electrically connected may be prevented through the coating part 230. Alternatively, damage of the recess part 222 and the diagonal part 224 due to external force may be prevented through the coating part 230, or damage of other components due to angled portions of the recess part 222 and the diagonal part 224 may be prevented through the coating part 230.

At this time, the coating part 230 may comprise an insulating material. Here, the coating part 230 may comprise, for example, silicon. That is, the coating part 230 may comprise silicon, which is a material having excellent heat resistance, chemical resistance, insulation, and waterproof properties, to prevent the end of the aluminum sheet L1 from being exposed to the outside so as to be electrically connected. In addition, when heat is generated from in secondary battery 10, the coating part 230 may not be damaged or melted to protect the recess part 222 and the diagonal part 224 against external environments.

Here, when the recess part 222 is constituted by, for example, straight lines in a zigzag shape to form a plurality of bent portions, damage to the plurality of bent portions due to the external environments may be prevented through the coating part 230. However, the recess part 222 according to the present invention is not necessarily limited to being constituted by the straight lines in the zigzag shape.

### Battery Module

In the batter module according to the present invention, the above-described secondary battery 10 may be provided in plurality. The content with respect to the secondary battery 10 are substituted with the above contents.

According to the present invention, the plurality of secondary batteries 10 constituting the battery module may be arranged so that the recess parts 222 formed in the plurality of secondary batteries face each other, and also, the diagonal parts 224 formed in the plurality of secondary batteries face each other. Therefore, in the case of the battery module according to the present invention, when compared to the prior art, since an empty space formed by the diagonal part 224 may be additionally secured, the interference between the secondary battery and other components in the battery module may be prevented from occurring, and also, space utilization of the battery module may be improved.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Secondary battery
100 : Electrode assembly
100a: Main body
110: Electrode tab
112: First electrode tab
114: Second electrode tab
200: Exterior
210: Accommodation part
220: Sealing part
222: Recess part
224: Diagonal part
300: Electrode lead
310 : First electrode lead
320 : Second electrode lead
D: Protrusion region
E: Corner of sealing part
L: Longitudinal direction of exterior
S: Diagonal direction

## Claims

1. A pouch-type secondary battery comprising:
an electrode assembly having a structure in which electrodes and separators are alternately disposed; and
a pouch-type exterior configured to accommodate the electrode assembly,
wherein the exterior comprises:
an accommodation part in which a space accommodating the electrode assembly is formed; and
a sealing part formed along a circumference of the accommodation part and formed by attaching some areas of the exterior to each other so that the accommodation part is sealed from the outside,
wherein a plurality of corners are formed on the sealing part,
at least one of the plurality of corners comprises:
a recess part recessed toward the electrode assembly; and
a diagonal part formed adjacent to the recess part and formed toward the recess part in a diagonal direction (S) by crossing a longitudinal direction (L) of the exterior.

2. The pouch-type secondary battery of claim 1, wherein the recess part is formed in a curved shape that is recessed toward the electrode assembly.

3. The pouch-type secondary battery of claim 2, wherein the diagonal part is formed in a straight line.

4. The pouch-type secondary battery of claim 3, wherein the recess part and the diagonal part are in direct contact with each other.

5. The pouch-type secondary battery of claim 1, wherein an entire area of the recess part is placed on an area adjacent to the electrode assembly based on a virtual line extending in the diagonal direction (S) of the diagonal part.

6. The pouch-type secondary battery of claim 1, further comprising an electrode lead electrically connected to the electrode assembly and protruding outside from the sealing part,
wherein each of the recess part and the diagonal part are formed on a corner formed at one side of the electrode lead.

7. The pouch-type secondary battery of claim 6, wherein the recess part is in direct contact with an area of the sealing part, from which the electrode lead protrudes.

8. The pouch-type secondary battery of claim 6, wherein the electrode lead comprises:
a first electrode lead protruding from one side of the sealing part; and
a second electrode lead protruding from the other side of the sealing part, which is opposite to the one side,
wherein the recess part and the diagonal part are formed at a corner formed at one side of the first electrode lead and a corner formed at one side of the second electrode lead, respectively.

9. The pouch-type secondary battery of claim 1, further comprising a coating part applied to surround the recess part and the diagonal part.

10. A battery module comprising the secondary battery of claim 1.

11. The battery module of claim 10, wherein the secondary battery is provided in plurality,
the recess parts, which are respectively formed in the plurality of secondary batteries, are arranged to face each other, and
the diagonal parts, which are respectively formed in the plurality of secondary batteries, are arranged to face each other.
